# EUROPÄISCHE PATENTSCHRIFT

(11) **EP 0 492 165 B1**
(45) Veröffentlichungstag und Bekanntmachung des Hinweises auf die Patenterteilung: **15.01.1997**
(21) Anmeldenummer: 91120223.2
(22) Anmeldetag: 27.11.1991
(51) Int. Cl.: G01M 13/00, G01M 15/00

(54) **Verfahren und Vorrichtung zur Überprüfung eines Katalysators**
Procedure and device for testing catalytic converters
Procédé et dispositif d'essai de catalysateurs

(30) Priorität: 11.12.1990 DE 4039429
(43) Veröffentlichungstag der Anmeldung: 01.07.1992
(73) Patentinhaber: LAMTEC Mess- und Regeltechnik für Feuerungen GmbH & Co KG, 69190 Walldorf (DE)
(72) Erfinder: Baier, Gunar, Dr., W-6800 Mannheim 81 (DE); Schumann, Bernd, Dr., W-7255 Rutesheim (DE)
(74) Vertreter: Rupprecht, Klaus, Dipl.-Ing.

(56) Entgegenhaltungen:
- EP-A- 0 409 013
- DE-A- 3 104 410
- DE-A- 3 736 259
- DE-A- 3 830 515
- DE-A- 4 001 970

## Beschreibung

Die Erfindung bezieht sich auf ein Verfahren zur Überprüfung eines Katalysators für Fahrzeuge mit Ottomotoren sowie eine Vorrichtung zur Durchführung des Verfahrens gemäß den Patentansprüchen 1 und 2.

Ein solches Verfahren und eine solche Vorrichtung kommen dort zum Einsatz, wo Schadstoffe von Abgasen aus Ottomotoren mittels Katalysatoren entfernt werden. Um die Abgase solcher Motoren möglichst vollständig von Schadstoffen zu reinigen, wird das Kraftstoff/Luftverhältnis von Ottomotoren mit einer Lambdasonde geregelt. Das aus dem Motor kommende Abgas wird anschließend über einen Drei-Wege-Katalysator geleitet. Dadurch wird erreicht, daß noch brennbare Bestandteile wie Kohlenmonoxid und Wasserstoff oxidiert und Stickoxide reduziert werden. Die Funktionsfähigkeit eines solchen Katalysators nimmt mit wachender Betriebsdauer ab. Es ist deshalb nötig, die Funktionstüchtigkeit des Katalysators in definierten Zeitabschnitten zu prüfen.

Das bisher verwendete Standardverfahren umfaßt die Ermittlung der Abgasemission während eines vorgegebenen Fahrzyklus, und ist auf Grund der nötigen Simulation der Betriebszustände des Motors und der nötigen Meßtechnik sehr zeit- und kostenaufwendig.

Aus der DE-A-3 443 649 ist ein Verfahren zur Überprüfung eines Katalysators bekannt. Hierfür wird vor und hinter dem Katalysator jeweils eine Lambdasonde angeordnet. Die Regelfrequenzen der Spannungssignale der beiden Sonden werden bei der Steuerung des Kraftstoff/Luftverhältnisses miteinander verglichen. Da die Effektivität eines Katalysators unter anderem von seiner Fähigkeit bestimmt wird, Sauerstoff zu speichern, kann aus dem Verhältnis der beiden Regelfrequenzen auf die Funktionsfähigkeit des Katalysators geschlossen werden. Nachteilig an dieser Vorrichtung ist, daß der Quotient der Regelfrequenzen für jeden Fahrzeugtyp und jede Katalysatoranlage unterschiedlich ist. Die Meßgröße wird nicht nur durch die Effektivität des Katalysators selbst, sondern auch durch die Eigenschaften der Lambdasonden und der Regelelektronik bestimmt.

Aus der DE-A-3 736 259 ist eine Einrichtung zur Ermittlung der Konvertierbarkeit eines Katalysators bekannt. Zu diesem Zweck wird vor und hinter dem Katalysator die NOₓ-, die HC- und CO-Konzentration des Abgases ermittelt. Die Einrichtung ist so ausgebildet, daß die Überprüfung des Katalysators nur im ruhenden Zustand des Fahrzeugs durchgeführt werden kann.

In der DE-A-3 830 515 sind ein Verfahren zur Überprüfung eines Katalysators gemäß dem Oberbegriff des Anspruchs 1 und eine entsprechende Vorrichtung gemäß dem Oberbegriff des Anspruchs 2 beschrieben. Hierfür ist vor und hinter dem Katalysator jeweils eine Sauerstoffsonde installiert, mit deren Hilfe der Sauerstoffgehalt in dem Abgas bestimmt wird. Die Größe der Signaldifferenz gibt Aufschluß über die Funktionsfähigkeit des Katalysators.

Aus der EP-A-0 409 013 sind ein Verfahren und eine Vorrichtung zum Messen der Abgaswerte von Kraftfahrzeugen bekannt. Mit Hilfe der Meßeinrichtung werden der HC- und CO-Gehalt im Abgas am Ausgang des Katalysators ermittelt. Die ermittelten HC- und CO-Werte werden zusammen mit Sauerstoffmeßwerten des Abgases, die während der Fahrt gespeichert werden, einem Rechner zur Auswertung zugeführt. Die Meßvorrichtung für HC und CO und die Auswertevorrichtung sind nicht in das Fahrzeug eingebaut. Eine Überprüfung des Katalysators während der Fahrt ist damit nicht möglich.

Der Erfindung liegt die Aufgabe zugrunde, ein Verfahren aufzuzeigen, mit dem die Funktionsfähigkeit eines für Ottomotoren bestimmten Katalysators während der Fahrt überprüft werden kann, sowie eine Vorrichtung zu schaffen, mit der dieses Verfahren durchführbar ist.

Das erfindungsgemäße Verfahren ist zum einen kostengünstig in seiner Durchführung. Erfindungsgemäß ist in Strömungsrichtung des Abgases gesehen, vor dem Katalysator eine Sauerstoffsonde und hinter dem Katalysator eine weitere Sonde angeordnet, die in der Lage ist, den Kohlenstoffmonoxidgehalt und/oder den Wasserstoffgehalt des Abgases zu ermitteln. Bei der hinter dem Katalysator angeordneten Sonde handelt es sich um eine keramische Festelektrolytzelle mit speziellen, elektrokatalytisch aktiven Elektroden, die auf einem Zirkonoxidfestelektrolyten angeordnet sind. Das Abgas eines einwandfrei arbeitenden Katalysators ist nahezu frei von Kohlenmonoxid und Wasserstoff. Der Katalysator wird auch dann noch als voll funktionsfähig angesehen, wenn geringe Mengen an Kohlenstoff und Wasserstoff in dem Abgas enthalten sind. Ein vorgegebener Grenzwert darf jedoch nicht überschritten werden. Das erfindungsgemäße Verfahren und die zugehörige Vorrichtung sind so ausgebildet, daß eine Überprüfung des Katalysators während der Fahrt des Kraftfahrzeugs durchgeführt werden kann. Da die meisten Fahrzeuge bereits eine Sauerstoffsonde zur Ermittlung des Sauerstoffgehalts im Abgas aufweisen, und diese in Strömungsrichtung des Abgases gesehen vor dem Katalysator angeordnet ist, muß für eine Überprüfung des Katalysators nur noch hinter dem Katalysator eine Wasserstoff-und/oder Kohlenmonoxidsonde in dem Strom des Abgases angeordnet werden. Die Differenz der Ausgangssignale der beiden Sonden gibt Auskunft über die Zusammensetzung des aus dem Katalysator kommenden Abgases. Insbesondere ist die Größe des Differenzsignals eine Funktion des Gehalts an Wasserstoff und/oder Kohlenmonoxid. Erfindungsgemäß besteht die Möglichkeit, jedes mit einem Otto-Motor ausgerüstete Kraftfahrzeug dauerhaft mit einer solchen Prüfeinrichtung zu versehen. Zu diesem Zweck wird die Kohlenmonoxid- und/oder wasserstoffsonde dauerhaft hinter dem Katalysator installiert. Ihre Ausgangssignale werden einer Katalysatorkontrolleinheit zugeführt. Das Ausgangssignal der Sauerstoffsonde wird zusätzlich einem Motorsteuercomputer zugeführt. Dieser steht mit der Motorregelung in Verbindung. Ein Diagnosecomputer ist mit dem Motorsteuercomputer und der Katalysatorkontrolleinheit verbunden. Diese Einheit bereitet die Signale auf für den Diagnosecomputer. Erfolgt die Überprüfung der Katalysator funktion kontinuierlich während des Betreibens des Kraftfahrzeugs, muß berücksichtigt werden, daß beim Kaltstart und in der Aufwärmphase sowie bei Leistungswechseln des Motors erhöhte Konzentrationen an Kohlenmonoxid und Wasserstoff im Abgas des Motors enthalten sind. Die Analyse des Motorenstandes erfolgt durch den Diagnosecomputer. Als Entscheidungsgrößen können beispielsweise die Kühlwassertemperatur, die Drehzahlvarianten des Motors und das Spannungssignal der Sauerstoffsonde verwedet werden. Des weiteren ist zu berücksichtigen, daß die Abgastemperatur und damit die Betriebstemperaturen der Sonden variieren. Damit Messungen nur bei definierten Betriebszuständen des Motors erfolgen, werden die Signale der Sonden in Abhängigkeit von der Motoranalyse des Diagnosecomputers nur zu geeigneten Zeitpunkten während der Fahrt registriert. Die Registrierung erfolgt beispielsweise dann, wenn der Katalysator bei einem Motorbetrieb unter einer hohen Raumgeschwindigkeit beladen wird, so daß seine Funktionsfähigkeit bis an die Hundertprozentgrenze gefordert ist. Die Prüfungen der Funktionsfähigkeit des Katalysators werden durch den Diagnosecomputer bestimmt. Die Meßsignale werden an den Diagnosecomputer weitergeleitet, der dann bei mehrmaligem Überschreiten eines bestimmten Grenzsignals die Katalysatorfehlfunktion meldet. Um Fehlmeldungen der Prüfungsvorrichtung im dynamischen Fahrbetrieb zu vermeiden, ist es insbesondere von Vorteil, die Meßsignale über eine gewisse Zeit zu mitteln, so daß Kurzzeitemissionsspitzen weniger stark gewichtet werden als ein dauerhaftes Anheben des Sensorpotential bei konstantem Fahrbetrieb. Damit ist es auch möglich, eine langfristige diskontinuierliche Überwachung des Katalysators durchzuführen. Überprüfungen könnten dann beispielsweise in bestimmten Betriebsstundenintervallen durchgeführt werde. Erfindungsgemäß besteht die Möglichkeit, die Sensoren mit Thermoelementen zu bestücken. Durch eine Temperaturmessung kann der Bereich, in dem das Spannungssignal der Sensoren ausgewertet werden soll festgelegt werden. Dadurch ist eine Vergleich mit einem vorgegebenen Grenzwert, der den Grad der Katalysatoralterung bestimmt, leichter durchführbar. Weitere vorteilhafte Ausgestaltungen dieser Erfindung sind in den Unteransprüchen gekennzeichnet. Die Erfindung wird nachfolgend anhand einer Zeichnung erläutert.

Die einzige zur Beschreibung gehörende Figur zeigt eine Vorrichtung 1, die eine Wasserstoff und/oder Kohlenmonoxidsonde 2, eine Sauerstoffsonde 3, eine Katalysatorkontrolleinrichtung 4, einen Motorsteuercomputer 5 sowie einen Diagnosecomputer 6 aufweist. Die Wasserstoff- und/oder Kohlenmonoxidsonde 2 ist am Abgasausgang 7E eines Katalysators 7 angeordnet, während die Sauerstoffsonde am Abgaseingang 7A dieses Katalysators 7 installiert ist. Das Ausgangssignal der Wasserstoff- und/oder Kohlenmonoxidsonde 2 wird über eine Leitung 10 dem Eingang 47 der Katalysatorkotrolleinheit 4 zugeführt. Das Ausgangssignal der Sauerstoffsonde 3 steht über die Leitung 11 am Eingang 43 der Katalysatorkontrolleinrichtung 4 und am Signaleingang 5a des Motorsteuercomputers 5 an. Der Motor 8, dessen Abgas 8M dem Katalysator 7 zugeführt wird, wird durch den Motorsteuercomputer 5 geregelt. Aus dem Ausgangssignal der Sauerstoffsonde 3 erzeugt der Motorsteuercomputer 5 ein Regelsignal zur Einstellung des Kraftstoff/Luft-Verhältnisses im Motor 8. Als Sonde 2 eignet sich vorzugsweise der in der DE-A1-4021929 beschriebene Sensor. Dieser weist vorzugsweise eine Meßelektrode und eine Referenzelektrode auf, und kann Wasserstoff und Kohlenmonoxid detektieren. Der Meßelektrode wird das aus dem Katalysator 7 kommende Abgas zugeführt. Zwischen den beiden Elektroden bildet sich bei einer definierten Arbeitstemperatur der Sonde 2 ein Potential aus, das als Ausgangssignal über die Leitung 10 der Katalysatorkontrolleinrichtung 4 zugeführt wird. Die Katalysatorkontrolleinrichtung 4 bildet aus den beiden Signalen der Sonden 2 und 3 ein Differenzsignal das dem Wasserstoff und/oder Kohlenmonoxidgehalt des Abgases entspricht. Überschreitet das von der Katalysatorkontrolleinrichtung 4 erzeugte Signal einen festegelegten Grenzwert, so wird die Funktionsuntüchtigkeit des Katalysators 7 angezeigt. Der Überprüfungszeitpunkt und die Überprüfungsdauer des Katalysators 7 können mit Hilfe des Diagnosecomputers 6 gesteuert werden.

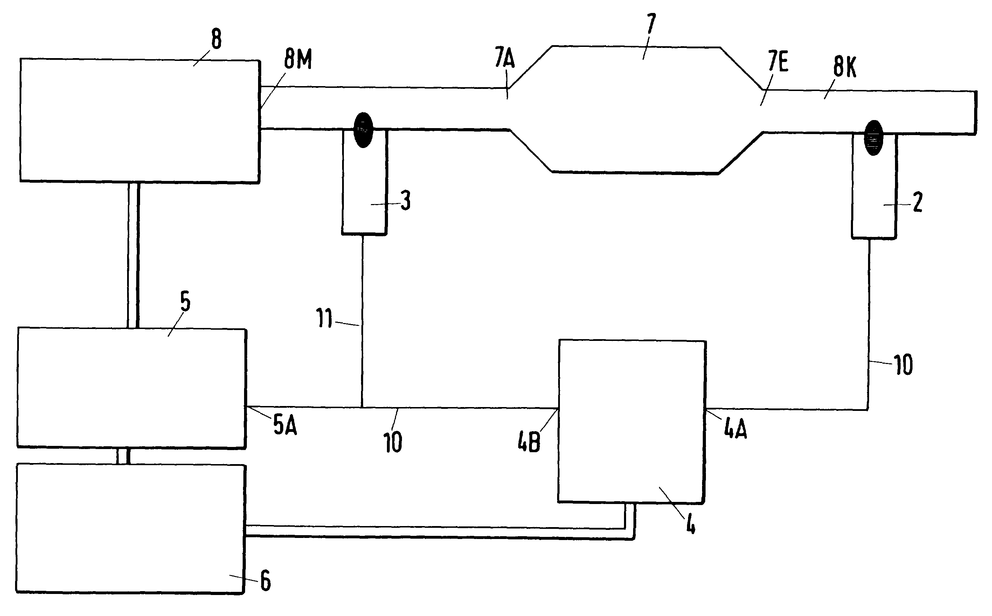

## Patentansprüche

1. Verfahren zur Überprüfung eines Katalysators (7) für Fahrzeuge mit Otto-Motoren (8), wobei die Bestandteile des Abgases teilweise vor und hinter dem Katalysator (7) erfaßt werden, dadurcn gekennzeichnet, daß mittels einer Sauerstoffsonde (3) des Sauerstoffgehalt des in den Katalysator (7) eintretenden Abgases (8M) und mittels einer Wasserstoff- und/oder Kohlenmonoxidsonde (2) der Wasserstoff- und/oder Kohlenmonoxidgehalt des aus dem Katalysator (7) kommenden Abgases (8K) während der Fahrt und bei einer definierten Temperatur des Abgases und der Meßsonden (2 und 3) ermittelt und der Prüfungszeitpunkt und die Überprüfungsdauer von einem Diagnosecomputer (6) gesteuert wird, und daß der Katalysator (7) beim mehrmaligen Überschreiten eines gespeicherten Grenzwertes des Wasserstoff- und/oder Kohlenmonoxidgehalts als defekt einstuft und selbiges von dem Diagnosecomputer (6) angezeigt wird.

2. Vorrichtung zur Überprüfung eines Katalysators (7) von Kraftfahrzeugen mit einem Otto-Motor (8), wobei die Bestandteile des Abgases teilweise vor und hinter dem Katalysator erfaßt werden, dadurch gekennzeichnet, daß zur Überprüfung des Katalysators während der Fahrt, diesem eine Sauerstoffsonde (3) vor- und eine Wasserstoff-und/oder Kohlendioxidsonde (2) in Strömungsrichtung des Abgases gesehen nachgeschaltet ist, daß die Signalausgänge der beiden Sonden (2 und 3) an eine Katalysatorkontrolleinrichtung (4) angeschlossen sind, und der Signalausgang der Sauerstoffsonde (4) zusätzlich mit dem Signaleingang eines Motorsteuercomputers (5) verbunden ist, der zur Regelung des Brennstoff/Luft Verhältnisses des Motors (8) vorgesehen ist, und daß der Motorcomputer (5) und die Katalysatorkontrolleinrichtung (4) mit einem Diagnosecomputer (6) in Verbindung stehen, der zur Prüfung der Funktionsfähigkeit des Katalysators (7) bestimmt und die Funktionen des Katalysators (7) meldet.

3. Vorrichtung nach Anspruch 2, dadurch gekennzeichnet, daß als Wassserstoff- und/oder Kohlendioxidsonde (2) eine keramische Festelektrolytzelle mit elektrokatalytischen Elektroden vorgesehen ist, und daß die Elektroden auf einem Zirkoniumoxidfestelektrolyten angeordet sind.

## Claims

1. Method for checking a catalytic converter (7) for vehicles with Otto engines (8), the components of the exhaust gas being recorded in part upstream and in part downstream of the catalytic converter (7), characterized in that the oxygen content of the exhaust gas (8M) entering the catalytic converter (7) is determined by means of an oxygen probe (3) and the hydrogen and/or carbon monoxide content of the exhaust gas (8K) coming from the catalytic converter (7) is determined by means of a hydrogen and/or carbon monoxide probe (2), the contents being determined during travel and at a defined temperature of the exhaust gas and of the measuring probes (2 and 3), and the time at which checking is carried out and the duration of checking are controlled by a diagnostic computer (6), and in that the catalytic converter (7) is classified as defective if a stored limiting value for the hydrogen and/or carbon monoxide content is exceeded several times, and this fact is indicated by the diagnostic computer (6).

2. Apparatus for checking a catalytic converter (7) of motor vehicles with an Otto engine (8), the components of the exhaust gas being recorded in part upstream and in part downstream of the catalytic converter, characterized in that, for the purpose of checking the catalytic converter during travel, an oxygen probe (3) is connected upstream of it in the direction of flow of the exhaust gas and a hydrogen and/or carbon dioxide [sic] probe (2) is connected downstream of it in the direction of flow of the exhaust gas, in that the signal outputs of the two probes (2 and 3) are connected to a converter-monitoring device (4), and the signal output of the oxygen probe (4) [sic] is additionally connected to the signal input of an engine control computer (5) which is provided for the purpose of controlling the fuel/air ratio of the engine (8), and in that the engine computer (5) and the converter-monitoring device (4) are connected to a diagnostic computer (6) which [lacuna] intended for the purpose of checking the ability to function of the catalytic converter (7) and reports the functions of the catalytic converter (7).

3. Apparatus according to Claim 2, characterized in that a ceramic solidelectrolyte cell with electrocatalytic electrodes is provided as the hydrogen and/or carbon dioxide [sic] probe (2) and in that the electrodes are arranged on a zirconium oxide solid electrolyte.

## Revendications

1. Procédé de contrôle d'un dispositif catalytique (7) pour des véhicules automobiles moteur (8) à allumage par étincelles dans lequel les composants des gaz d'échappement sont mesurés pour partie en amont et en aval du dispositif catalytique (7), caractérisé-par le fait que l'on mesure, à l'aide d'une sonde à oxygène (3), la teneur en oxygène des gaz d'échappement (8M) entrant dans le dispositif catalytique et, à l'aide d'une sonde à hydrogène et/ou d'une sonde à monoxyde de carbone (2), la teneur en hydrogène et/ou en monoxyde de carbone des gaz d'échappement (8K) sortant du dispositif catalytique (7) pendant la marche, pour une température déterminée des gaz d'échappement et des sondes de température (2 et 3), que l'on commande l'instant et la durée du contrôle par un ordinateur (6) de diagnostic, et qu'en cas de dépassement répété d'une valeur seuil mémorisée pour la teneur en hydrogène et/ou en monoxyde de carbone, on considère le dispositif catalytique comme défectueux et on indique cet état au moyen de l'ordinateur (6) de diagnostic.

2. Dispositif pour le contrôle d'un dispositif catalytique (7) de véhicule automobile à moteur (8) à allumage par étincelles les composants des gaz d'échappement étant déterminés pour partie en amont et en aval du dispositif catalytique, caractérisé par le fait que pour contrôler le dispositif catalytique pendant la marche, une sonde à oxygène (3) est placée en amont du dispositif catalytique, vu dans la direction d'écoulement des gaz d'échappement, et une sonde à hydrogène et/ou une sonde à dioxyde de carbone (2) est placée en aval du dispositif catalytique, vu dans la direction d'écoulement des gaz d'échappement, par le fait que les sorties de signal des deux sondes ( 2 et 3) sont connectées à un dispositif de contrôle (4) de dispositif catalytique et la sortie de signal de la sonde à oxygène (3) est reliée en plus à l'entrée de signal d'un ordinateur de gestion (5) de moteur prévu pour réguler le rapport combustible/air du moteur (8) et par le fait que l'ordinateur (5) du moteur et le dispositif de contrôle (4) du dispositif catalytique sont reliés à un ordinateur (6) de diagnostic qui est destiné à contrôler le fonctionnement du dispositif catalytique (7) ainsi que les fonctions dudit dispositif catalytique.

3. Dispositif selon la revendication 2, caractérisé par le fait qu'il est prévu comme sonde à hydrogène et/ou comme sonde à dioxyde de carbone (2) une cellule à électrolyte solide céramique avec des électrodes électro-catalytiques et par le fait que les électrodes sont disposées sur un électrolyte solide à base d'oxyde de zirconium.
